# EUROPÄISCHE PATENTSCHRIFT

(11) **EP 3 216 640 B1**
(45) Veröffentlichungstag und Bekanntmachung des Hinweises auf die Patenterteilung: **16.09.2020**
(21) Anmeldenummer: 16159583.0
(22) Anmeldetag: 10.03.2016
(51) Int. Cl.: B60K 15/035, B60K 15/04, B60K 15/03

(54) **VENTILVORRICHTUNG**
VALVE DEVICE
DISPOSITIF DE SOUPAPE

(43) Veröffentlichungstag der Anmeldung: 13.09.2017
(73) Patentinhaber: Magna Energy Storage Systems GesmbH, 8261 Sinabelkirchen (AT)
(72) Erfinder: ECIM, Marko, 8041 Graz (AT); EGGENREICH, Eduard, 8160 Weiz (AT)
(74) Vertreter: Zangger, Bernd

(56) Entgegenhaltungen:
- EP-A1- 0 993 980
- WO-A1-2007/088023
- DE-U1- 20 110 760
- US-A- 5 596 971

## Beschreibung

### Gebiet der Erfindung

Die vorliegende Erfindung betrifft eine Ventilvorrichtung für eine Entlüftungsvorrichtung für eine Tankvorrichtung eines Kraftfahrzeugs, eine Entlüftungsvorrichtung umfassend die Ventilvorrichtung und eine Tankvorrichtung umfassend die Entlüftungsvorrichtung.

### Stand der Technik

Entlüftungsvorrichtungen werden in Kraftstofftanks von Kraftfahrzeugen eingesetzt um im Tank bei dessen Betrieb oder bei der Betankung des Tanks auftretende Gase aus dem Tank abzuführen (Entlüftung) oder auch erforderliche Gase insbesondere Luft dem Tank zuzuführen (Belüftung). Dazu werden Entlüftungsleitungen aus dem Tank geführt und beispielsweise über Zwischenstationen wie Dampfabscheider und Ausgleichsbehälter die Gase meist über ein Kraftstoffdampffilter wie ein Aktivkohlefilter nach außen geführt. Es können dabei Ventile vorgesehen sein, die eine Entlüftungsleitung ausschließlich während einer Betankung öffnen (Betankungsentlüftungsleitung) oder ausschließlich oder zusätzlich während eines Normalbetriebs der Tankvorrichtung öffnen (Betriebsentlüftungsleitung).

Es ist bekannt, beispielsweise aus der DE 10 2006 004 630 A1, dass zwischen einer Betankungsentlüftungsleitung und dem Kraftstoffdampffilter eine Verbindung zu einem Einfüllrohr vorgesehen sein kann, die als Rezirkulationsöffnung oder als Rezirkulationskanal bezeichnet wird. Durch einen solchen Rezirkulationskanal kann ein Teil der bei der Betankung aus dem Tank verdrängten Gase durch das Einfüllrohr in den Tank rezirkulieren.

Eine Verbindung von einer Entlüftungsleitung zum Einfüllrohr kann beispielsweise auch für eine On-Board-Diagnose (OBD) verwendet werden.

Wenn eine Entlüftungsvorrichtung eine fluidleitende Verbindung zwischen einer Entlüftungsleitung und einem Einfüllrohr aufweist, besteht jedoch das Problem, dass bei einem durchlaufenden Zapfventil, also bei einer Fehlfunktion die ein Nichtabschalten des Zapfventils bewirkt, Kraftstoff vom Zapfventil über das Einfüllrohr und die fluidleitende Verbindung zur Entlüftungsleitung und somit beispielsweise weiter zu einem Kraftstoffdampffilter gelangen kann.

Aus der WO 2007/088023 A1 ist ein Kraftstofftank für ein Kraftfahrzeug bekannt, umfassend eine Tankverbindung die einen Betankungsdurchgang umschließt und Betankungsbelüftungskanäle, die mit einem Befüllkopf der Tankverbindung verbunden sind, wobei der Befüllkopf mindestens ein Umschaltventil aufweist, das in einer ersten Schaltstellung (Tankbetankungsposition) einen Strömungsweg von den Betankungsbelüftungskanälen zu einem Entlüftungskanal öffnet und welches in einer zweiten Schaltstellung (Betriebsstellung) den Strömungsweg von den Betankungsbelüftungskanälen zu dem Entlüftungskanal schließt.

### Zusammenfassung der Erfindung

Es ist eine Aufgabe der Erfindung, eine Ventilvorrichtung für eine Entlüftungsvorrichtung der genannten Art in dieser Hinsicht zu verbessern und insbesondere eine Ventilvorrichtung anzugeben, die den Eintritt von Kraftstoff aus einem Einfüllrohr in eine Entlüftungsleitung bei einem durchlaufenden Zapfventil verhindert, sowie eine entsprechende Entlüftungsvorrichtung und Tankvorrichtung anzugeben, umfassend eine solche Ventilvorrichtung.

Die Lösung der Aufgabe erfolgt durch eine Ventilvorrichtung für eine Entlüftungsvorrichtung für eine Tankvorrichtung eines Kraftfahrzeugs mit Merkmalen gemäß Anspruch 1.

Die Ventilvorrichtung umfasst einen mit einer Entlüftungseingangsleitung der Entlüftungsvorrichtung verbindbaren Eingang, einen mit einer Entlüftungsausgangsleitung der Entlüftungsvorrichtung verbindbaren Tankausgang und einen mit einem Einfüllrohr der Tankvorrichtung verbindbaren Einfüllrohrausgang umfasst, wobei die Ventilvorrichtung ferner ein Tankventil mit einem Tankventilsitz und ein Einfüllrohrventil mit einem Einfüllrohrventilsitz umfasst, wobei durch das Tankventil die Verbindung zwischen dem Eingang und dem Tankausgang öffenbar und schließbar ist und durch das Einfüllrohrventil die Verbindung zwischen dem Eingang und dem Einfüllrohrausgang öffenbar und schließbar ist.

Erfindungsgemäß bedeuten die Ausdrücke "verbunden" und "verbindbar" dabei immer fluidleitend verbunden bzw. fluidleitend verbindbar. Eine Verbindung ist vorzugsweise eine direkte Verbindung.

Unter "Einfüllrohr" kann stets auch ein Ende des Einfüllrohrs gemeint sein, insbesondere ein als Tankstutzen ausgebildetes Ende des Einfüllrohres.

Unter "Entlüftungsvorrichtung" wird erfindungsgemäß eine Vorrichtung verstanden die Gase abführen und/oder zuführen kann, umfasst also im engeren Sinn eine Entlüftung und/oder eine Belüftung.

Die Entlüftungseingangsleitung und/oder die Entlüftungsausgangsleitung können, um mit dem Tank verbindbar zu sein, insbesondere jeweils einen Tankanschluss aufweisen.

Der Eingang und/oder der Tankausgang können, um mit der Entlüftungseingangsleitung bzw. Entlüftungsausgangsleitung verbindbar zu sein, als Nippel ausgebildet sein, insbesondere als Stecknippel mit radial außen ausgebildeten Ausformungen die ein Abrutschen einer aufgesteckten Leitung verhindern können.

Erfindungsgemäß verfügt die Ventilvorrichtung einer Entlüftungsvorrichtung über einen mit einem Einfüllrohr der Tankvorrichtung verbindbaren Einfüllrohrausgang. Dieser Einfüllrohrausgang ist jedoch über ein Einfüllrohrventil, beispielsweise im Fall eines durchgehenden Zapfventils, auch schließbar, um das Eindringen von Kraftstoff in den Eingang und somit in die Entlüftungseingangsleitung zu verhindern.

Ferner verfügt die Ventilvorrichtung über ein Tankventil, so dass die Verbindung zwischen dem Eingang und dem Tankausgang, insbesondere während einer Betankung, schließbar ist, so dass als Ausgang lediglich der verschließbare Einfüllrohrausgang geöffnet bleibt.

Die Entlüftungseingangsleitung kann insbesondere eine aus einer Hauptentlüftungsleitung oder Betankungsentlüftungsleitung, zum Beispiel mittels Ausgleichsbehälter oder Abscheidevorrichtung, abgezweigte erste Ausgangsleitung sein, deren anderer, zweiter Zweig eine Kraftstoffdampffilterleitung sein kann, die in ein Kraftstoffdampffilter münden kann. Bevorzugt sind die Abzweigung und die Leitungen so ausgebildet, dass nur ein kleiner Teil der Gase aus der Betankungsentlüftungsleitung in die Entlüftungseingangsleitung abgezweigt wird, beispielsweise etwa 1 Prozent, und der verbleibende größere Teil der Gase durch die Kraftstoffdampffilterleitung abgeführt wird.

Erfindungsgemäß umfasst das Tankventil zur Aktuierung einen axial beweglichen Ventilstössel, wobei der Ventilstössel von außerhalb der Ventilvorrichtung zugänglich ist, so dass, durch axiale Bewegung des Ventilstössels, insbesondere in Richtung nach innen der Ventilvorrichtung, mittels einer Krafteinwirkung von außerhalb der Ventilvorrichtung, insbesondere durch das Einführen eines Zapfventils in das Einfüllrohr der Tankvorrichtung, das Tankventil schließbar ist.

Das Tankventil wird bevorzugt durch das Einführen eines Zapfventils in das Einfüllrohr bzw. den Tankstutzen, also bei Betankung, geschlossen. Das Einfüllrohrventil bleibt im Zustand der Betankung im Normalfall, also insbesondere wenn sich nicht Kraftstoff im Bereich des Einfüllrohrventils auf Grund eines durchlaufenden Zapfventils staut, bevorzugt geöffnet, so dass es beispielsweise zu einer Rezirkulation von Gasen bei der Betankung durch das Einfüllrohr in den Tank kommen kann. Bei einem durchlaufenden Zapfventil kann das Einfüllrohrventil geschlossen werden, so dass Kraftstoff insbesondere nicht in die Entlüftungseingangsleitung und weiter zu einem Aktivkohlefilter gelangen kann.

Während nicht betankt wird, also in einem Normalbetrieb der Tankvorrichtung, ist das Tankventil bevorzugt geöffnet, insbesondere mittels einer Rückstellfeder, so dass Gase durch die Entlüftungsausgangsleitung in den Tank gelangen können.

Bevorzugt umfasst der Einfüllrohrausgang eine Bohrung im Ventilstössel. Der Einfüllrohrausgang verläuft vorzugsweise radial innen in einem hohl ausgebildeten Ventilstössel entlang der Achse des Ventilstössels.

Das Tankventil umfasst erfindungsgemäß einen Tankventilkörper, wobei der Tankventilkörper bei ausreichender axialer Bewegung des Ventilstössels axial durch den Ventilstössel mitbewegt wird und hierdurch auf dem Tankventilsitz aufsitzen kann um das Tankventil zu schließen.

Der Einfüllrohrventilsitz ist erfindungsgemäß am Tankventilkörper ausgebildet.

Weiterbildungen der Erfindung sind in den abhängigen Ansprüchen, der Beschreibung sowie den beigefügten Zeichnungen angegeben.

Bevorzugt weist das Einfüllrohrventil als Ventilkörper einen Schwimmkörper auf, der bei Aufschwimmen auf einer für den Tank vorgesehenen Flüssigkeit auf dem Einfüllrohrventilsitz aufsitzen kann um das Einfüllrohrventil zu schließen.

Der Schwimmkörper ist besonders bevorzugt eine Kugel, die eine geringere Dichte aufweist als der zur Aufnahme im Tank bestimmte Kraftstoff, insbesondere Benzin und/oder Diesel.

Bevorzugt ist der Schwimmkörper in einem Käfig angeordnet.

Der Schwimmkörper, gegebenenfalls mit Käfig, ist vorzugsweise in einer Bohrung des Ventilstössels angeordnet, insbesondere im Einfüllrohrausgang.

Vorzugsweise sind zwischen Ventilstössel und Tankventilkörper und/oder zwischen Tankventilkörper und einem Gehäuse der Ventilvorrichtung Rückstellfedern angeordnet, so dass der Ventilstössel nach einer Betätigung durch axiale Bewegung nach innen wieder nach außen geschoben wird und der Tankventilkörper in Richtung offenes Tankventil vorgespannt ist.

Erfindungsgemäß umfasst eine Entlüftungsvorrichtung für eine Tankvorrichtung eines Kraftfahrzeugs eine mit einem Tank der Tankvorrichtung verbindbare Entlüftungseingangsleitung, eine mit dem Tank verbindbare Entlüftungsausgangsleitung und eine Ventilvorrichtung, wie zuvor beschrieben, wobei der Eingang der Ventilvorrichtung mit der Entlüftungseingangsleitung verbunden ist, wobei der Tankausgang der Ventilvorrichtung mit der Entlüftungsausgangsleitung verbundenen ist.

Eine Tankvorrichtung eines Kraftfahrzeugs umfasst erfindungsgemäß einen Tank, ein Einfüllrohr und eine Entlüftungsvorrichtung, wie zuvor beschrieben, wobei die Entlüftungseingangsleitung mit dem Tank verbunden ist, die Entlüftungsausgangsleitung mit dem Tank verbunden ist und der Einfüllrohrausgang der Ventilvorrichtung mit dem Einfüllrohr verbunden ist, insbesondere mit einem Ende des Einfüllrohrs, nämlich einem Tankstutzen.

Die Ventilvorrichtung ist vorzugsweise so montiert, dass der Ventilstössel teilweise in das Einfüllrohr reicht und durch das Einführen eines Zapfventils in das Einfüllrohr, insbesondere durch Bewegen einer Klappe, der Ventilstössel axial bewegt wird und hierdurch das Tankventil schließt. Die axiale Bewegung des Ventilstössels kann direkt durch das Zapfventil oder auch indirekt über ein oder mehrere Zwischenelemente ausgelöst werden, insbesondere durch Verschwenken einer Klappe, so dass die Klappe durch das Zapfventil geschwenkt wird und durch die Klappe der Ventilstössel bewegt wird. Die Ventilvorrichtung ist bevorzugt im Bereich eines Einfüllstutzens des Einfüllrohres montiert.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer erfindungsgemäßen Entlüftungsvorrichtung an einem Einfüllrohr.
- Fig. 2: ist eine Schnittdarstellung einer erfindungsgemäßen Ventilvorrichtung von der Seite in einem Normalbetriebszustand, entsprechend dem Schnitt A-A gemäß Fig. 3.
- Fig. 3: ist eine Darstellung der Ventilvorrichtung gemäß Fig. 2 von oben.
- Fig. 4: ist eine Schnittdarstellung einer erfindungsgemäßen Ventilvorrichtung von der Seite in einem Normalbetankungszustand, entsprechend dem Schnitt A-A gemäß Fig. 5.
- Fig. 5: ist eine Darstellung der Ventilvorrichtung gemäß Fig. 4 von oben.
- Fig. 6: ist eine Schnittdarstellung einer erfindungsgemäßen Ventilvorrichtung von der Seite in einem Betankungszustand bei durchlaufendem Zapfventil, entsprechend dem Schnitt A-A gemäß Fig. 7.
- Fig. 7: ist eine Darstellung der Ventilvorrichtung gemäß Fig. 6 von oben.

### Detaillierte Beschreibung der Erfindung

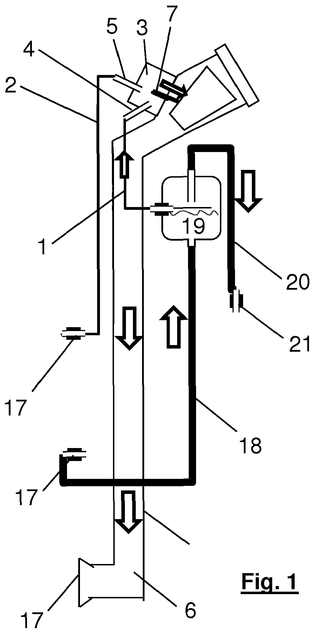

In Fig. 1 ist eine erfindungsgemäße Entlüftungsvorrichtung dargestellt, mit einer Ventilvorrichtung 3, die an einem Einfüllrohr 6 einer Tankvorrichtung montiert ist.

Das Einfüllrohr 6 verläuft von einem als Tankstutzen ausgebildeten oberen Ende bis zu einem Tankanschluss 17, an dem das Einfüllrohr 6 mit einem nicht dargestellten Tank der Tankvorrichtung verbindbar oder verbunden ist.

Ebenfalls mit dem Tank der Tankvorrichtung über einen Tankanschluss 17 verbindbar ist eine Entlüftungsausgangsleitung 2, sowie indirekt eine Entlüftungseingangsleitung 1. Dabei stellt die Entlüftungseingangsleitung 1 einen von einer einen Tankanschluss 17 aufweisenden Betankungsentlüftungsleitung 18 über einen Ausgleichsbehälter 19 abgezweigten Leitungszweig dar. Der nicht abgezweigte, größere Teil der Betankungsentlüftungsleitung 18 bildet die Kraftstoffdampffilterleitung 20 und kann über einen Aktivkohlefilteranschluss 21 mit einem Aktivkohlefilter oder anderem Kraftstoffdampffilter verbunden sein.

Die in den Leitungen dargestellten Pfeile zeigen jeweils die Richtung der Entlüftung an, die Pfeile im Einfüllrohr die Befüllrichtung des Tanks mit Kraftstoff. Die durch die Entlüftungseingangsleitung 1 über die Ventilvorrichtung 3 in das Einfüllrohr 6 gelangenden Gase können während einer Betankung mit dem Kraftstoff durch das Einfüllrohr 6 in den Tank rezirkulieren.

Im Fall der Benutzung der Entlüftungsvorrichtung zur Belüftung kann Gas, insbesondere Luft über den Aktivkohlefilteranschluss 21 und die Kraftstoffdampffilterleitung 20 in umgekehrter Richtung einströmen und teils über die Betankungsentlüftungsleitung 18 in den Tank gelangen und zum anderen Teil über die Entlüftungseingangsleitung 1 auch in diesem Fall der Ventilvorrichtung 3 zuströmen.

Ein Eingang 4 der Ventilvorrichtung 3 ist mit der Entlüftungseingangsleitung 1 verbunden, der Tankausgang 5 der Ventilvorrichtung 3 ist mit der Entlüftungsausgangsleitung 2 verbundenen. Ein Einfüllrohrausgang 7 der Ventilvorrichtung 3 ist mit dem Einfüllrohr 6 verbunden.

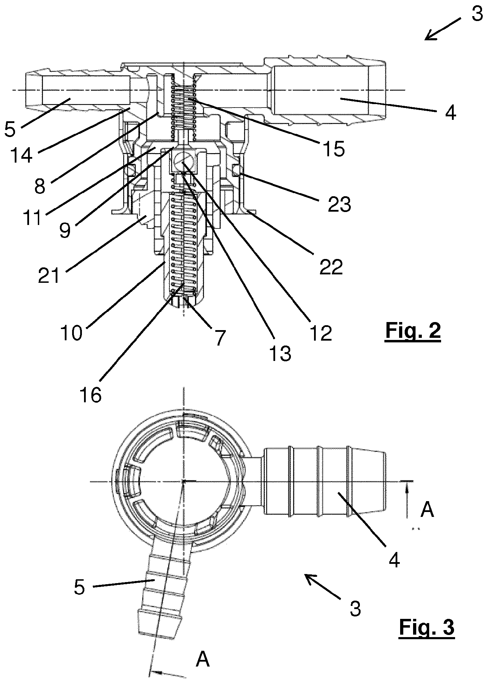

Die Ventilvorrichtung 3 ist so am Einfüllrohr 6 montiert, dass der Einfüllrohrausgang 7 und somit ein Ventilstössel 10 (siehe Fig. 2) am Einfüllrohrausgang 7 in das Einfüllrohr 6 reicht und durch das Einführen eines Zapfventils in das Einfüllrohr 6 der Ventilstössel 10 mittels einer verschwenkbaren Klappe axial bewegt wird und hierdurch das Tankventil schließt, so dass am Eingang 4 einströmende Gase ausschließlich durch den Einfüllrohrausgang 7 aus der Ventilvorrichtung 3 gelangen können. Fig. 2 zeigt eine Schnittdarstellung einer erfindungsgemäßen Ventilvorrichtung 3 von der Seite in einem Normalbetriebszustand, also wenn keine Betankung erfolgt, entsprechend dem Schnitt A-A der Fig. 3.

Die Ventilvorrichtung 3 weist einen mit einer Entlüftungseingangsleitung 1 verbindbaren Eingang 4 als Stecknippel auf und einen mit einer Entlüftungsausgangsleitung 2 verbindbaren Tankausgang 5 als zweiten Stecknippel auf. Zur fluidleitenden Verbindung mit einem Einfüllrohr 6 einer Tankvorrichtung weist die Ventilvorrichtung 3 zudem einen Einfüllrohrausgang 7 auf, dessen Verbindung zum Eingang 4 über ein Einfüllrohrventil verschließbar ist. Das Einfüllrohrventil umfasst einen Einfüllrohrventilsitz 9 an welchem ein Schwimmkörper 12, nämlich eine Kugel geringer Dichte, aufsitzen kann. Der Schwimmkörper 12 sitzt in einem Käfig 13 am dem Inneren der Ventilvorrichtung 3 zugewandten Ende des Ventilstössels 10. Solange der Schwimmkörper 12 nicht beispielsweise von Kraftstoff umgeben ist liegt der Schwimmkörper am Boden des Käfigs 13 und verschließt das Einfüllrohrventil nicht.

Der Einfüllrohrausgang 7 wird durch eine Bohrung im Ventilstössel 10 gebildet. Der Schwimmkörper 12 ist im als Hohlkörper ausgeführten Ventilstössel 10 angeordnet bzw. in der Bohrung des Ventilstössels 10 angeordnet.

Das Tankventil der Ventilvorrichtung 3 weist einen Tankventilkörper 11 auf, wobei der Tankventilkörper 11 bei ausreichender axialer Bewegung des Ventilstössels 10 axial durch den Ventilstössel 10 mitbewegt wird und hierdurch auf einem Tankventilsitz 8 aufsitzen kann um das Tankventil, also die Verbindung zwischen dem Eingang 4 und dem Tankausgang 5, zu schließen.

Der Einfüllrohrventilsitz 9 ist am Tankventilkörper 11 ausgebildet.

Zwischen dem Ventilstössel 10 und dem Tankventilkörper 11 wirkt eine Stösselfeder 16 als Rückstellfeder, zwischen Tankventilkörper 11 und einem Gehäuse 14 der Ventilvorrichtung 3 wirkt eine Ventilfeder 15 als Rückstellfeder.

Der Ventilstössel 10 ist als Hohlzylinder ausgebildet und koaxial und innerhalb des Tankventilkörpers 11 angeordnet. Der Tankventilkörper 11 ist ebenfalls als Hohlzylinder ausgebildet und seinerseits wieder koaxial und innerhalb einer Ventilführung 21 angeordnet. Die Ventilführung 21 ist koaxial und innerhalb des Gehäuses 14 und einer Ventilaufnahme 22 angeordnet. In einer Nut des Gehäuses 14 ist zwischen Gehäuse 14 und Ventilaufnahme 22 eine Ringdichtung 23 angeordnet.

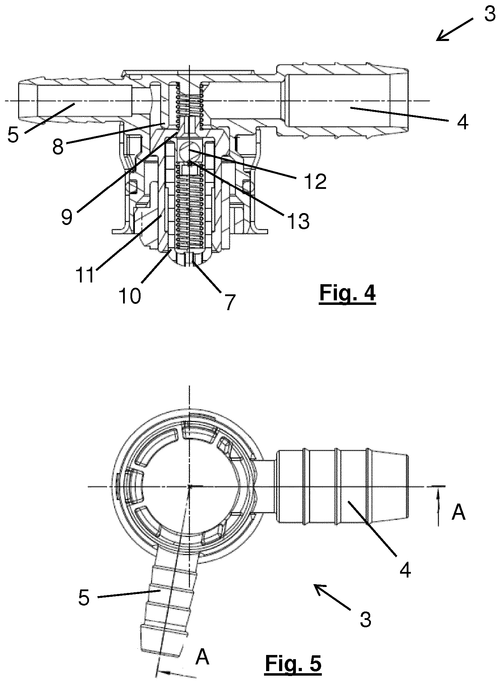

Fig. 4 zeigt die selbe erfindungsgemäße Ventilvorrichtung 3 in einem Normalbetankungszustand, also während einer Betankung. Dabei ist der Ventilstössel 10 nach innen, in Fig. 4 daher nach oben, gedrückt. Der Tankventilkörper 11 sitzt auf dem Tankventilsitz 8 auf und verschließt somit das Tankventil und somit den Tankausgang 5. Der Schwimmkörper 12 liegt weiterhin am Boden des Käfigs 13, so dass das Einfüllrohrventil und somit Einfüllrohrausgang 7 geöffnet bleibt und eine Rezirkulation stattfinden kann.

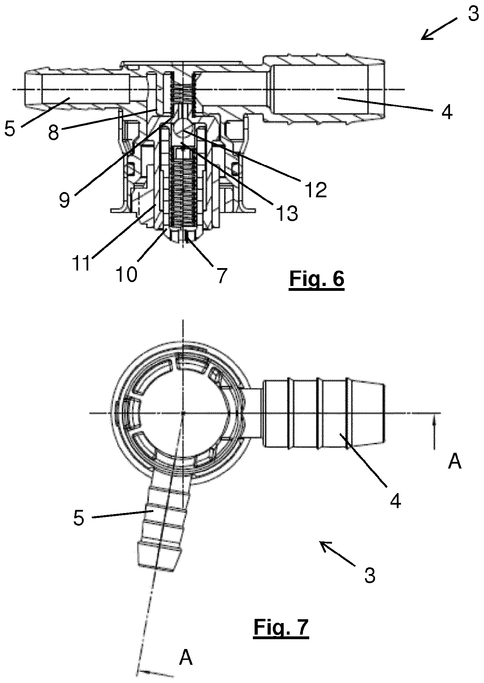

Fig. 6 zeigt schließlich die Ventilvorrichtung 3 in einem Betankungszustand bei durchlaufendem Zapfventil. Dabei ist der Ventilstössel 10 wieder nach innen gedrückt. Der Tankventilkörper 11 sitzt auf dem Tankventilsitz 8 auf und verschließt somit das Tankventil und somit den Tankausgang 5. Der Schwimmkörper 12 schwimmt hier auf Kraftstoff auf, ist an der Oberkante des Käfigs 13 am Einfüllrohrventilsitz 9 anliegend angeordnet, und verschließt dort das Einfüllrohrventil und somit Einfüllrohrausgang 7, so dass der den Schwimmkörper 12 umgebende Kraftstoff nicht in den Eingang 4 gelangen kann.

### Bezugszeichenliste

- 1: Entlüftungseingangsleitung
- 2: Entlüftungsausgangsleitung
- 3: Ventilvorrichtung
- 4: Eingang
- 5: Tankausgang
- 6: Einfüllrohr
- 7: Einfüllrohrausgang
- 8: Tankventilsitz
- 9: Einfüllrohrventilsitz
- 10: Ventilstössel
- 11: Tankventilkörper
- 12: Schwimmkörper
- 13: Käfig
- 14: Gehäuse
- 15: Rückstellfeder Ventilfeder
- 16: Rückstellfeder Stösselfeder
- 17: Tankanschluss
- 18: Betankungsentlüftungsleitung
- 19: Ausgleichsbehälter
- 20: Kraftstoffdampffilterleitung
- 21: Ventilführung
- 22: Ventilaufnahme
- 23: Ringdichtung

## Patentansprüche

1. Ventilvorrichtung für eine Entlüftungsvorrichtung für eine Tankvorrichtung eines Kraftfahrzeugs, wobei die Ventilvorrichtung (3) einen mit einer Entlüftungseingangsleitung (1) der Entlüftungsvorrichtung verbindbaren Eingang (4), einen mit einer Entlüftungsausgangsleitung (2) der Entlüftungsvorrichtung verbindbaren Tankausgang (5) und einen mit einem Einfüllrohr (6) der Tankvorrichtung verbindbaren Einfüllrohrausgang (7) umfasst, wobei die Ventilvorrichtung (3) ferner ein Tankventil mit einem Tankventilsitz (8) und ein Einfüllrohrventil mit einem Einfüllrohrventilsitz (9) umfasst, wobei durch das Tankventil die Verbindung zwischen dem Eingang (4) und dem Tankausgang (5) öffenbar und schließbar ist und durch das Einfüllrohrventil die Verbindung zwischen dem Eingang (4) und dem Einfüllrohrausgang (7) öffenbar und schließbar ist, wobei das Tankventil zur Aktuierung einen axial beweglichen Ventilstössel (10) umfasst, wobei der Ventilstössel (10) von außerhalb der Ventilvorrichtung (3) zugänglich ist, so dass, durch axiale Bewegung des Ventilstössels (10) mittels einer Krafteinwirkung von außerhalb der Ventilvorrichtung (3), das Tankventil schließbar ist, wobei das Tankventil einen Tankventilkörper (11) umfasst, wobei der Tankventilkörper (11) bei ausreichender axialer Bewegung des Ventilstössels (10) axial durch den Ventilstössel (10) mitbewegt wird und hierdurch auf dem Tankventilsitz (8) aufsitzen kann um das Tankventil zu schließen, **dadurch gekennzeichnet, dass** der Einfüllrohrventilsitz (9) am Tankventilkörper (11) ausgebildet ist.

2. Ventilvorrichtung nach Anspruch 1,
**dadurch gekennzeichnet, dass** der Einfüllrohrausgang (7) eine Bohrung im Ventilstössel (10) umfasst.

3. Ventilvorrichtung nach zumindest einem der vorhergehenden Ansprüche,
d**adurch gekennzeichnet**, dass das Einfüllrohrventil als Ventilkörper einen Schwimmkörper (12) aufweist, der bei Aufschwimmen auf einer für den Tank vorgesehenen Flüssigkeit auf dem Einfüllrohrventilsitz (9) aufsitzen kann um das Einfüllrohrventil zu schließen.

4. Ventilvorrichtung nach Anspruch 3,
**dadurch gekennzeichnet, dass** der Schwimmkörper (12) eine Kugel ist und/oder eine geringere Dichte aufweist als Benzin und/oder Diesel.

5. Ventilvorrichtung nach Anspruch 3 oder 4,
**dadurch gekennzeichnet, dass** der Schwimmkörper (12) in einem Käfig (13) angeordnet ist.

6. Ventilvorrichtung nach zumindest einem der Ansprüche 3 bis 5,
**dadurch gekennzeichnet, dass** der Schwimmkörper (12) in einer Bohrung des Ventilstössels (10) angeordnet ist.

7. Ventilvorrichtung nach Anspruch 1,
**dadurch gekennzeichnet, dass** zwischen Ventilstössel (10) und Tankventilkörper (11) und/oder zwischen Tankventilkörper (11) und einem Gehäuse (14) der Ventilvorrichtung (3) Rückstellfedern (15, 16) angeordnet sind.

8. Entlüftungsvorrichtung für eine Tankvorrichtung eines Kraftfahrzeugs, umfassend eine mit einem Tank der Tankvorrichtung verbindbare Entlüftungseingangsleitung (1), eine mit dem Tank verbindbare Entlüftungsausgangsleitung (2) und eine Ventilvorrichtung (3) nach zumindest einem der vorhergehenden Ansprüche, wobei der Eingang (4) der Ventilvorrichtung (3) mit der Entlüftungseingangsleitung (1) verbunden ist, wobei der Tankausgang (5) der Ventilvorrichtung (3) mit der Entlüftungsausgangsleitung (2) verbundenen ist.

9. Tankvorrichtung eines Kraftfahrzeugs umfassend einen Tank, ein Einfüllrohr (6) und eine Entlüftungsvorrichtung nach Anspruch 8, wobei die Entlüftungseingangsleitung (1) mit dem Tank verbunden ist, die Entlüftungsausgangsleitung (2) mit dem Tank verbunden ist und der Einfüllrohrausgang (7) der Ventilvorrichtung (3) mit dem Einfüllrohr (6) verbunden ist.

10. Tankvorrichtung nach Anspruch 9,
**dadurch gekennzeichnet, dass** die Ventilvorrichtung (3) so montiert ist, dass der Ventilstössel (10) teilweise in das Einfüllrohr (6) reicht und durch das Einführen eines Zapfventils in das Einfüllrohr (6) der Ventilstössel (10) axial bewegt wird und hierdurch das Tankventil schließt.

## Claims

1. Valve device for a ventilation device for a tank device of a motor vehicle, wherein the valve device (3) comprises an inlet (4), which can be connected to a ventilation inlet line (1) of the ventilation device, a tank outlet (5), which can be connected to a ventilation outlet line (2) of the ventilation device, and a filler pipe outlet (7), which can be connected to a filler pipe (6) of the tank device, wherein the valve device (3) furthermore comprises a tank valve, which has a tank valve seat (8), and a filler pipe valve, which has a filler pipe valve seat (9), wherein the connection between the inlet (4) and the tank outlet (5) can be opened and closed by the tank valve, and the connection between the inlet (4) and the filler pipe outlet (7) can be opened and closed by the filler pipe valve, wherein the tank valve comprises an axially movable valve tappet (10) for actuation, wherein the valve tappet (10) is accessible from outside the valve device (3), thus allowing the tank valve to be closed by axial movement of the valve tappet (10) by means of the action of a force from outside the valve device (3), wherein the tank valve comprises a tank valve member (11), wherein, given a sufficient axial movement of the valve tappet (10), the tank valve member (11) is simultaneously moved axially by the valve tappet (10) and can thereby come to rest on the tank valve seat (8) to close the tank valve, **characterized in that** the filler pipe valve seat (9) is formed on the tank valve member (11).

2. Valve device according to Claim 1,
**characterized in that** the filler pipe outlet (7) comprises a bore in the valve tappet (10).

3. Valve device according to at least one of the preceding claims,
**characterized in that** the filler pipe valve has, as a valve member, a float (12) which, when floating on a liquid provided for the tank, can come to rest on the filler pipe valve seat (9) to close the filler pipe valve.

4. Valve device according to Claim 3,
**characterized in that** the float (12) is a ball and/or has a lower density than petrol and/or diesel.

5. Valve device according to Claim 3 or 4,
**characterized in that** the float (12) is arranged in a cage (13).

6. Valve device according to at least one of Claims 3 to 5,
**characterized in that** the float (12) is arranged in a bore of the valve tappet (10).

7. Valve device according to Claim 1,
**characterized in that** return springs (15, 16) are arranged between the valve tappet (10) and the tank valve member (11) and/or between the tank valve member (11) and a housing (14) of the valve device (3) .

8. Ventilation device for a tank device of a motor vehicle, comprising a ventilation inlet line (1), which can be connected to a tank of the tank device, a ventilation outlet line (2), which can be connected to the tank, and a valve device (3) according to at least one of the preceding claims, wherein the inlet (4) of the valve device (3) is connected to the ventilation inlet line (1), wherein the tank outlet (5) of the valve device (3) is connected to the ventilation outlet line (2).

9. Tank device of a motor vehicle comprising a tank, a filler pipe (6) and a ventilation device according to Claim 8, wherein the ventilation inlet line (1) is connected to the tank, the ventilation outlet line (2) is connected to the tank, and the filler pipe outlet (7) of the valve device (3) is connected to the filler pipe (6).

10. Tank device according to Claim 9,
**characterized in that** the valve device (3) is mounted in such a way that the valve tappet (10) extends partially into the filler pipe (6), and the valve tappet (10) is moved axially by the introduction of a fuel pump nozzle into the filler pipe (6) and thereby closes the tank valve.

## Revendications

1. Dispositif de soupape pour un dispositif de désaérage pour un dispositif de réservoir d'un véhicule automobile, le dispositif de soupape (3) comprenant une entrée (4) pouvant être raccordée à une conduite d'entrée de désaérage (1) du dispositif de désaérage, une sortie de réservoir (5) pouvant être raccordée à une conduite de sortie de désaérage (2) du dispositif de désaérage et une sortie de tuyau de remplissage (7) pouvant être raccordée à un tuyau de remplissage (6) du dispositif de réservoir, le dispositif de soupape (3) comprenant en outre une soupape de réservoir avec un siège de soupape de réservoir (8) et une soupape de tuyau de remplissage avec un siège de soupape de tuyau de remplissage (9), la soupape de réservoir permettant d'ouvrir et de fermer la liaison entre l'entrée (4) et la sortie de réservoir (5) et la soupape de tuyau de remplissage permettant d'ouvrir et de fermer la liaison entre l'entrée (4) et la sortie de tuyau de remplissage (7), la soupape de réservoir, pour l'actionnement, présentant un poussoir de soupape déplaçable axialement (10), le poussoir de soupape (10) étant accessible depuis l'extérieur du dispositif de soupape (3) de telle sorte que par déplacement axial du poussoir de soupape (10) au moyen de l'application d'une force depuis l'extérieur du dispositif de soupape (3), la soupape de réservoir puisse être fermée, la soupape de réservoir comprenant un corps de soupape de réservoir (11), le corps de soupape de réservoir (11), en cas de déplacement axial suffisant du poussoir de soupape (10), étant déplacé axialement en même temps par le poussoir de soupape (10) et de ce fait pouvant reposer sur le siège de soupape de réservoir (8) afin de fermer la soupape de réservoir,
**caractérisé en ce que** le siège de soupape de tuyau de remplissage (9) est réalisé au niveau du corps de soupape de réservoir (11).

2. Dispositif de soupape selon la revendication 1,
**caractérisé en ce que** la sortie de tuyau de remplissage (7) comprend un alésage dans le poussoir de soupape (10).

3. Dispositif de soupape selon au moins l'une quelconque des revendications précédentes,
**caractérisé en ce que** la soupape de tuyau de remplissage présente, en tant que corps de soupape, un flotteur (12) qui, lorsqu'il flotte sur un liquide prévu pour le réservoir, peut reposer sur le siège de soupape de tuyau de remplissage (9) afin de fermer la soupape de tuyau de remplissage.

4. Dispositif de soupape selon la revendication 3,
**caractérisé en ce que** le flotteur (12) est une boule et/ou présente une plus faible densité que l'essence et/ou le diesel.

5. Dispositif de soupape selon la revendication 3 ou 4,
**caractérisé en ce que** le flotteur (12) est disposé dans une cage (13).

6. Dispositif de soupape selon au moins l'une quelconque des revendications 3 à 5,
**caractérisé en ce que** le flotteur (12) est disposé dans un alésage du poussoir de soupape (10).

7. Dispositif de soupape selon la revendication 1,
**caractérisé en ce qu'**entre le poussoir de soupape (10) et le corps de soupape de réservoir (11) et/ou entre le corps de soupape de réservoir (11) et un boîtier (14) du dispositif de soupape (3) sont disposés des ressorts de rappel (15, 16).

8. Dispositif de désaérage pour un dispositif de réservoir d'un véhicule automobile, comprenant une conduite d'entrée de désaérage (1) pouvant être raccordée à un réservoir du dispositif de réservoir, une conduite de sortie de désaérage (2) pouvant être raccordée au réservoir et un dispositif de soupape (3) selon au moins l'une quelconque des revendications précédentes, l'entrée (4) du dispositif de soupape (3) étant raccordée à la conduite d'entrée de désaérage (1), la sortie de réservoir (5) du dispositif de soupape (3) étant raccordée à la conduite de sortie de désaérage (2).

9. Dispositif de réservoir d'un véhicule automobile comprenant un réservoir, un tuyau de remplissage (6) et un dispositif de désaérage selon la revendication 8, la conduite d'entrée de désaérage (1) étant raccordée au réservoir, la conduite de sortie de désaérage (2) étant raccordée au réservoir et la sortie du tuyau de remplissage (7) du dispositif de soupape (3) étant raccordée au tuyau de remplissage (6).

10. Dispositif de réservoir selon la revendication 9,
**caractérisé en ce que** le dispositif de soupape (3) est monté de telle sorte que le poussoir de soupape (10) s'étende en partie dans le tuyau de remplissage (6) et que le poussoir de soupape (10) soit déplacé axialement par l'introduction d'un pistolet de remplissage dans le tuyau de remplissage (6) et ferme de ce fait la soupape de réservoir.
